Europäisches Patentamt

European Patent Office (11) Publication number: **0 036 457**

Office européen des brevets **B1**

(12) **EUROPEAN PATENT SPECIFICATION**

(45) Date of publication of patent specification: **20.02.85**

(51) Int. Cl.⁴: **B 29 C 55/12, H 01 B 3/44, H 01 G 4/18**

(21) Application number: **80300872.1**

(22) Date of filing: **20.03.80**

(54) A method of producing a polypropylene film for electrical appliances.

<table>
<tr><td>

(43) Date of publication of application:<br>**30.09.81 Bulletin 81/39**

(45) Publication of the grant of the patent:<br>**20.02.85 Bulletin 85/08**

(84) Designated Contracting States:<br>**DE FR GB IT**

(56) References cited:<br>**EP-A-0 008 623**<br>**EP-A-0 011 796**<br>**DE-A-2 553 693**<br>**DE-A-2 601 810**<br>**DE-A-2 722 087**<br>**DE-A-2 740 237**

</td><td>

(73) Proprietor: **MITSUBISHI RAYON CO. LTD.**<br>**3-19, Kyobashi 2-chome Chuo-Ku**<br>**Tokyo 104 (JP)**

(72) Inventor: **Nishikawa, Nobuaki**<br>**4-1-3, Ushikawadouri**<br>**Toyohashi-shi Aichi-ken (JP)**<br>Inventor: **Mochizuki, Mamoru**<br>**70-2, Sodouri Toyokawa-cho**<br>**Toyokawa-shi Aichi-ken (JP)**<br>Inventor: **Sakurai, Ichiro**<br>**4-1-3, Ushikawadouri**<br>**Toyohashi-shi Aichi-ken (JP)**

(74) Representative: **Warden, John Christopher et al**<br>**R.G.C. Jenkins & Co. 12-15, Fetter Lane**<br>**London EC4A 1PL (GB)**

</td></tr>
</table>

Courier Press, Leamington Spa, England.

# 0 036 457

## Description

This invention relates to a method of producing a polypropylene film for electrical appliances having excellent insulating oil impregnability as well as good electrical properties and usable for the oil-immersion type electrical appliances such as electric cables, capacitors, transformers, etc.

Because of its excellent insulation resistance and dielectric properties in comparison with the conventionally used insulating paper, the biaxially stretched polypropylene film is steadily gaining popularity in use for a variety of electrical appliances of which reduction of size and weight as well as long-time durability is required, such as electric cables, capacitors, transformers, etc., by taking the place of conventional insulating paper. Particularly in the case of capacitors, there is an increasing tendency to minimize use of insulating paper while maximizing the proportion of polypropylene film for the reasons associated with potential gradient, dielectric constant, insulation resistance and other matters. However, difficult problems arise in case the proportion of polypropylene film is increased, particularly where no insulating paper is used in combination. Because the conventional biaxially stretched polypropylene film has very high surface smoothness, such film adheres fast and hermetically to another similar film or to the surface of a foil (such as aluminum foil) electrode, so that it becomes very difficult to sufficiently get rid of air or moisture entrapped in the capacitors elements or to perfectly impregnate the insulating oil between the film surface and the electrode foil, making it liable to invite drop of the corona starting voltage, corona extinction voltage or dielectric breakdown voltage due to presence of the section unimpregnated with insulating oil, causing premature breakdown and other unsatisfactory electrical properties of the obtained product.

In order to solve these problems, there has been proposed, in the field of film capacitors for instance, to employ a composite dielectric using conventional insulating paper in combination with polypropylene film or to give ruggedness to the film surface by subjecting the polypropylene film to embossing to thereby improve insulating oil impregnation. These methods, however, are liable to cause deterioration of the film properties and also may rather retard oil impregnation in the recessed parts. There is also known a surface roughening method in which an additional polymer or polymers are blended with polypropylene and the blend is formed into a film and subjected to stretching. According to this method, however, the electrical properties of the product might be badly affected when using a certain type of polymer and also no satisfactory impregnation of insulating oil may be provided. There has been also proposed a method in which the unstretched film containing the different forms of crystals is subjected to stretching to produce a reticulate structure on the film surface, but the thus treated film, although excellent in insulating oil impregnability, is still unsatisfactory in the general electrical properties. According to this method, since required impregnation of insulating oil is provided by forming a fine but deep impregnating structure on the film surface by means of mere surface reticulation, such impregnating structure collapses gradually during use, so that although the film has good properties initially, it is gradually lowered in performance with time, that is, it is poor in so-called V—T characteristic.

The Applicants earlier British Patent Specification GB—A—1490454 describes a surface roughened and translucent polypropylene film having at least on one side a surface layer composed of a two or three dimensional network structure, the network elements constituting the structure being present to a degree of at least 1000 per cm² of the film surface. The network structure is said to take various forms. For example the network structure may be composed of network elements consisting of fibril-like materials, kinked material, film-like materials, crater-like materials or combinations thereof. The appearance of the surface-roughened film, which is composed of an aggregate of network elements consisting of crater-like structures (e.g. of 10 to 300 $\mu$m diameter), is said to have a luna-like hilly or polka-dotted structure and there are some cases where reticular fibrous tissues have been interspersed within network elements consisting of said crater-like materials.

This surface structure was found to contribute to improved impregnation properties for insulating oil and good electrical qualities could be obtained from electrical appliances.

However in GB 1490454 no emphasis was placed upon the degree of surface roughness as a critical property.

The Applicants have now found that the combination of a particular surface structure together with a minimum degree of surface roughness produce a surprising improvement in the impregnation properties and consequently the electrical properties of e.g. capacitors which can be produced.

The dielectric polypropylene film for oil-immersion type electrical appliances with which the invention is concerned has on its surface densely distributed surface-roughening structures comprising crater-like structures having, at the periphery, protuberances composed of fibrous elements superposed and intertwined with each other and including large-sized structures having a diameter of about 0.02 to 0.2 mm and small-sized structures having a diameter of about 0.002 to 0.02 mm where at least some of the small-sized structures exist inside the large-sized structures, and randomly undulating fibrous structures, said film having a degree of surface roughness as defined hereinafter of at least 5%.

GB—A—1542671 describes a process of producing polypropylene film in which the resultant product is similar to that described above. In this prior process molten polypropylene material is extruded by a die into a tubular stalk form and the stalk passes coaxially under tension over a cooling

2

mandrel for crystallisation thereof and formation of a frost line and the process requires continuously affectuating an elevated and constant temperature at the outer stalk surface at a predetermined position between the die and the frost line to cause a "skin effect" to appear coextensively with the outer surface of the tubular stalk, the skin effect being said to be due to spherulites of type III crystal structure in an outer layer of the stalk. The process also requires raising the temperature of the outer layer to melt the type III crystals and immediately thereafter insufflating the stalk to produce a biaxially oriented bubble and thereafter collapsing and slitting the bubble.

The Applicants have developed in accordance with this invention a different set of process control parameters which allow of easy and accurate monitoring to produce products of consistent quality. In particular, in contrast to the prior art step of effecting an elevated temperature at a predetermined position between the die and the frost line, which normally requires a reheating step, the Applicants process requires the tubular melt to be progressively cooled after emergence from the die and the temperature gradient in the direction of flow is controlled by a cooling medium to certain specified limits.

Thus the Applicant provides a method of producing a film of the above specified kind, comprising melt-extruding a crystalline polypropylene which does not contain a $\beta$ type crystallization nucleating agent through a ring die at a temperature within the range of 210—250°C to form a tubular melt, subsequently progressively cooling the tubular melt by sliding the inner side of the said melt on a cooling mandrel in counterflow to a cooling medium within the mandrel in such a manner that the relation between a temperature gradient factor (Y) defined by the following formula (I) and the thickness (X) of the obtained tubular unstretched molded article satisfies the requirement of the following formula (II), while exposing the outer side of said tubular melt to a cooling medium of a temperature below $T_2$°C to cool said melt and then taking it up to obtain unstretched polypropylene containing no $\beta$ type crystallisation nucleating agent, and then biaxially stretching said polypropylene under such conditions that the stretching temperature at the stretching initiation point is in the range of 145°—176°C and the stretching ratio in one direction is less than 8, where:—

$$Y(°C/sec) = \frac{(T_2-T_1) \times R}{L} \qquad (I)$$

and

$$Y > \frac{4400}{X} \qquad (II)$$

$T_1$ is the cooling medium temperature in °C at the inlet of the cooling mandrel
$T_2$ is the cooling medium temperature in °C at the outlet of the cooling mandrel
R is the tube take-up rate in cm/sec
L is the effective length in cm of the cooling mandrel
X is the thickness in $\mu$ of the unstretched molded article.

In the preferred film the large-sized, crater-like structures have a distribution density in excess of 2,500/cm².

Preferably at least 5 of said small-sized, crater-like structures exist inside at least some of said large-sized crater-like structures.

The polypropylene film for electrical appliances provided by the method according to this invention is quite different from a mere laminated film formed by laminating a non-woven fabric-like sheet on the flat film surface but is characterised by a specific roughened surface structure produced on the surface of a stretched film obtained by subjecting a single-layered unstretched molded article to specific biaxial stretching as further described below. Said specific roughened surface structure comprises essentially the crater-like rugged structures having, at the periphery, protuberances composed of the fibrous textures superposed and intertwined with each other and the crimped fibrous structures distributed on the inner side and/or outer side of said crater-like rugged structures. Said crater-like rugged structures are grouped roughly into two types: large-sized crater-like rugged structures having a diameter within the range of 0.02—0.2 mm and small-sized crater-like rugged structures having a diameter within the range of 0.002—0.2 mm. It is possible to produce film in which these large-sized and small-sized structures are distributed in various patterns: either of said types of structures is distributed singly (first case); said both types of structures are distributed mixedly (second case); small-sized crater-like rugged structures are distributed on the inside of the large-sized crater-like rugged structure (third case); first case and third case is combined (fourth case); second case and third case are combined (fifth case).

On the surface of the polypropylene film produced according to this invention, there are also provided the undulating fibrous structures which are distributed on the inner side and/or outer side of said large-sized and small-sized crater-like structures. These crater-like structures and undulating fibrous structures are preferably distributed at high distribution density to provide a film surface which has excellent insulating oil impregnating characteristic, keeps free from collapse of the specific roughened structure even in long-time use and suffers almost no deterioration of the performance with time. It is desirable that the large and small-sized crater-like structures on the surface of the polypropylene film produced according to this invention are distributed not sparsely but thickly at high density as said above, and it is most desirable that both large-sized and small-sized crater-like structures coexist, with the former existing at a density over 2,500 pieces/cm². Best results (in accordance with the invention) are obtained when at least some of the latter, preferably more than 5 are present on the inside of the former. Also, the polypropylene film for electrical appliances produced according to this invention needs to have a degree of surface roughness of over 5%. The degree of surface roughness has close relation to the degree of ruggedness of said undulating structure as well as to the insulating oil impregnability and inhibition of deterioration of various electrical properties with time. If the degree of surface roughness is less than 5%, no satisfactory film surface properties are provided even if the crater-like rugged structures and crimped fibrous structures coexist in the manner specified in this application. The "degree of surface roughness" as referred to in this invention was determined in the following way. The film is cut to a size of 100 mm×200 mm, and five pieces of film of said size are laid one on another and folded back so that the roughened side comes to the inside to form a 10-layer film laminate, and its thickness is measured by a micrometer. This thickness is given as $\mu M$. Then the gravimetric thickness of the film is determined by measuring the weight of said 5 pieces of film of said size and dividing the measured weight by the polypropylene density 0.905 g/cm³ and the surface area of the folded pieces (100 cm²). This gravimetric thickness is given as $\mu W$. Then the degree of surface roughness is given from the following formula:

$$\text{Degree of surface roughness} = \frac{\mu M - \mu W}{\mu W} \times 100 \ (\%)$$

The polypropylene film for electrical appliances having the said peculiar roughened surface structure can be obtained by the method provided by this invention. One of the salient features of the film producing method according to this invention is that a crystalline polypropylene, which does not contain a $\beta$ type crystallisation nucleating agent, is melt-extruded in a specified temperature range, that is, 210°—250°C, preferably 210°—245°C, to form a tubular melt and this tubular melt is slided on a cooling mandrel in contact therewith so as to provide a specific temperature gradient depending on the thickness of the unstretched molded article to be obtained, thereby producing the $\beta$ type crystals on the external surface layer of the unstretched molded article. This could be attained as a result of the studies on the relationship between the mandrel cooling conditions in use of a cooling mandrel and the thickness of the unstretched molded article as well as the comprehensive relation between these matters and formation of the $\beta$ type crystals. Another feature of the method of this invention is that the unstretched molded article having said $\beta$ type crystals on the surface layer is biaxially stretched under the specific stretching conditions to form a specific roughened structure on the film surface.

The crystalline polypropylene used in this invention may not necessarily be a homopolymer of propylene but includes copolymers with a small quantity of other $\alpha$-olefins, and is an isotactic polypropylene having 90% or more of the residue as extracted with boiling n-heptane for 8 hrs., said percentage representing the isotacticity of the polypropylene. The polypropylene used in this invention may be of any degree of polymerization provided that it allows required melt molding, but it is desirable to use one having a melt index within the range of 0.5—20. If a specific $\beta$ type crystallization nucleating agent such as quinacridonequinone, substituted quinacridonequinone or a metal chelate compound thereof is added in the polypropylene used in this invention, the properties of the produced film are deteriorated by such nucleating agent contained in the film or by the fine voids produced in the film under the influence of said nucleating agent, so that it is necessary that the crystalline polypropylene used in this invention contains no specific $\beta$ type crystallization nucleating agent.

In practicing the method of this invention, a crystalline polypropylene is first melt-extruded through a ring die at a temperature within the range of 210°—250°C, preferably 210°—245°C, to form a tubular melt. The melt extrusion temperature has close relation to formation of the $\beta$ type crystal nucleus, and it is assumed that such $\beta$ type crystal nucleus is produced only when melt extrusion is performed in the above-defined temperature range. The tubular melt, if melt-extruded at a temperature outside the said range, is not provided with the preferred properties even if it is molded so as to satisfy the conditions of the formulae (I) and (II).

Then the inner side of the thus obtained tubular melt is slided on a cooling mandrel in contact therewith while the outer side of the melt is exposed to a cooling medium of a temperature below a certain specified level to cool the melt and then the latter is taken up to obtain a tubular polypropylene unstretched molded article. In performing this operation, the cooling conditions by the cooling mandrel, tube take-up rate, thickness of unstretched molded article and other conditions must be controlled such that the relation between the factor of temperature gradient (Y) as defined by above formula (I) (which is decided by the cooling medium temperatures at the inlet and outlet of the cooling mandrel, effective length of the cooling mandrel and tube take-up rate) and the thickness (X) of the tubular unstretched molded article to be produced satisfies the above-shown formula (II). The "factor of temperature gradient (Y)" is the rate of rise of temperature (per second) of the tubular melt in the take-up direction, and such factor has close relation to the amount, size and distribution of the $\beta$ type crystals produced on the external surface layer of the tubular unstretched molded article. The conditions defined by the formula (II) are those under which there can be produced the sufficient $\beta$ type crystals to obtain a film with a degree of surface roughness of over 5%, and it is quite epochal that the method of this invention has made it possible to set the required factor of temperature gradient (Y) immediately from the thickness (X) of the unstretched molded article.

The cooling mandrel used in this invention is cylindrical in shape and may be made of an ordinary material such as metal, ceramic, glass, carbon or high-molecular substance, and as for the surface configuration of such cooling mandrel, it may be specular-finished, satinized or fabric-surfaced. In the inside of the cooling mandrel are provided a cooling medium supply pipe and a discharge pipe adapted for attaining said factor of temperature gradient. Air or water may be favorably used as cooling medium. The "effective length" of the cooling mandrel is the length from the position at which the inside of the tubular melt actually contacts the mandrel when sliding thereon to the position at which the melt separates from the mandrel.

Water-cooling, air-cooling or other suitable cooling means may be employed for cooling the outer side of said tubular melt by exposing it to a cooling medium of a temperature below the cooling medium temperature ($T_2$) at the outlet of the cooling mandrel. If the outer side of the melt is cooled by exposing it to a cooling medium of a higher temperature than $T_2$, it becomes hard to acquire an effective factor of temperature gradient, making it unable to obtain a film having the specific roughened surface structure as defined above.

The process of producing the polypropylene unstretched molded article is described below by way of an embodiment with reference to the accompanying drawings.

Fig. 1 illustrates a melt-extrusion molding apparatus used in the process, but such is to be taken as a mere example.

Fig. 2 shows the relation between the thickness (X) of the unstretched molded article and the factor of temperature gradient (Y).

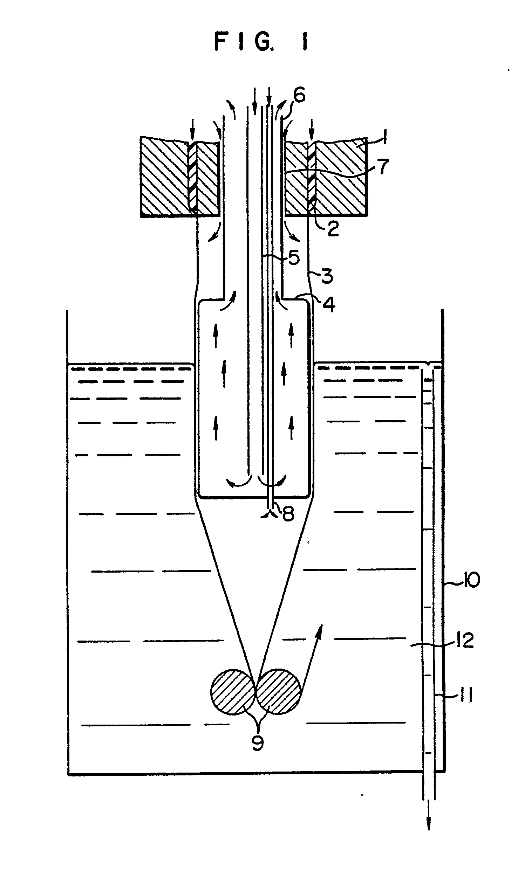

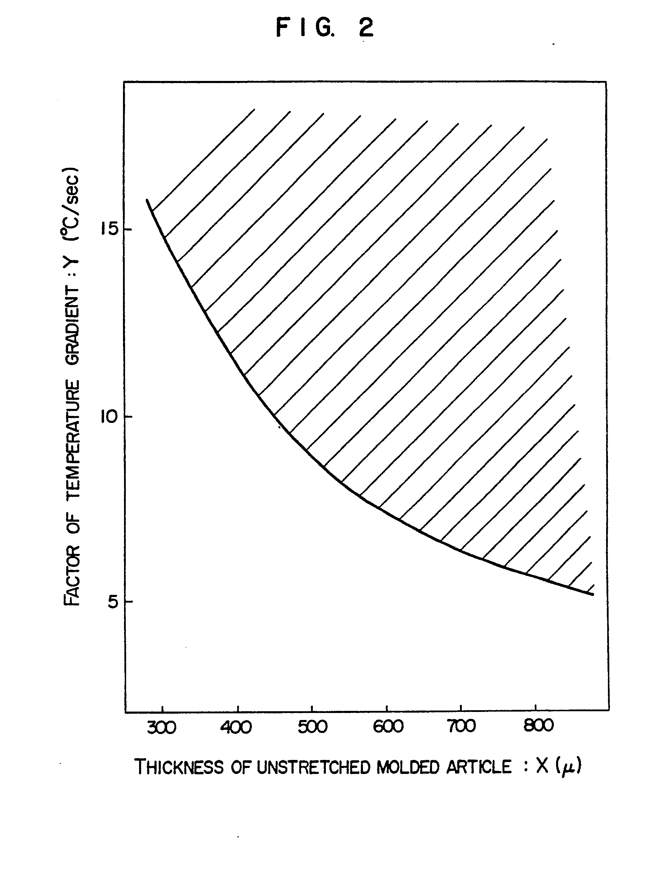

First, a crystalline polypropylene is fed into the extruder and melt-extruded through an annular slit 2 of a ring die 1 (Fig. 1) at a temperature of 210°—250°C to form a tubular melt 3. The compressed air is supplied from a compressed air supply pipe 7 to expand said tubular melt 3 to a diameter equal to or slightly greater than the outer diameter of a cooling mandrel 4, and the interior of the expanded melt is contacted and slided on the surface of said cooling mandrel 4 while the exterior of said melt is exposed to a cooling liquid 12, which is of a temperature below the cooling medium temperature at the outlet of the cooling mandrel, in an external cooling liquid tank 10 which is arranged movable up and down and in which the liquid level is kept constant by overflowing the liquid through an overflow pipe 11, and the thus cooled melt is guided downwardly. Said cooling mandrel has provided in its inside a cooling liquid supply pipe 5 and a cooling liquid discharge pipe 6 penetrating through the ring die 1 and is always controlled to the cooling medium temperatures $T_1$, $T_2$ defined in the formula (I) by a cooling medium. The tubular article which has separated from the cooling mandrel 4 is further guided downwards while maintaining its shape by dint of the compressed air which is blown into the tubular article from a compressed air blow pipe 8 at the bottom of the cooling mandrel so that said tubular article won't be collapsed and deformed by the cooling liquid in the external cooling liquid tank, and then said article is taken up through the nip rolls 9. During this operation, the factor of temperature gradient (Y) is set by the thickness (X) of unstretched molded article to be produced, and therefrom, the cooling medium temperature at the inlet and outlet of the cooling mandrel and the tube take-up rate are adjusted so as to satisfy the formula (II). The relation between the thickness (X) of the unstretched molded article and the factor of temperature gradient (Y) is shown in Fig. 2. In the figure, the section indicated by slant lines is the area where the requirement of the formula (II) is met.

A specified amount of $\beta$ type crystals are produced on the external surface layer of the tubular polypropylene unstretched molded article obtained according to the just described process.

The thus obtained unstretched polypropylene molded article is then subjected to biaxial stretching. As means for such stretching, there may be employed any suitable known method such as flat simultaneous or successive biaxial stretching method or tubular biaxial stretching method. In this invention, as the polypropylene unstretched molded article having in its surface layer the $\beta$ type crystals obtained according to a specific method such as described above is subjected to biaxial stretching, said $\beta$ type crystals are converted into the $\alpha$ type crystals with the result that there takes place a volumetric shrinkage to produce a film having a peculiar rough surface structure.

It is an essential condition in performing the method of this invention that the stretching temperature at the stretching initiation point is within the range defined by the melting point of the $\beta$ type crystals of polypropylene and the melting point of the $\alpha$ type crystals, that is, the range of 145°—176°C. The "stretching initiation point" means the point at which there substantially begins decrease of the thickness of the unstretched molded article in the stretching step, and in the flat simultaneous biaxial stretching method, it is the point at which the distance between the two opposing clips begins to increase, and in the flat successive biaxial stretching method, it is the point where the film thickness in the vertically stretching portion begins to decrease. In the tubular biaxial stretching method, the part

5

at which the diameter of the tube passing in the stretching tower heater begins to increase may be taken as said "stretching initiation point". If the stretching temperature at the stretching initiation point is outside the range defined in this invention, it is impossible to obtain a polypropylene film for electrical appliances intended to obtain in this invention.

It is also an essential requirement in performing the method of this invention that the stretching ratio in one direction when effecting biaxial stretching is less than 8. If said stretching ratio is greater than 8, it becomes impossible to obtain a film having a specific roughened surface structure aimed in this invention. The lower limit of the stretching ratio is substantially regulated by the necking.

The stretching ratio necessary for completing necking varies depending on the stretching temperature and other factors, but usually 3 to 6 times stretching is required for one direction.

In the method of this invention, after the biaxial stretching, the stretched film is usually subjected to an ordinary heat treatment such as heat stretching treatment or a heat relaxing treatment to provide the film with good heat dimensional stability.

The polypropylene film for electrical appliances, which is intended to provide in this invention, can be obtained only when all of the said conditions are satisfied, and if even one of the said conditions is not met, it becomes impossible to accomplish the object of this invention.

The polypropylene film for electrical appliances provided according to this invention has excellent mechanical properties and its inside structure is extremely compact and airtight while its surface has a roughened structure with very densely distributed ruggedness to show good insulating oil impregnability. Also, the film can maintain its excellent electrical properties even in long-time use and thus can be ideally used for a variety of electrical appliances.

The invention is described in further detail hereinbelow by way of the examples thereof. In the following examples, the melt index (M.I.) is the discharge weight in the 10-minute operation under the following conditions: load, 2,160 g; temperature, 230°C; plunger diameter, 9.5 $\phi$mm; and orifice diameter, 2 $\phi$mm. I.I. is isotacticity as determined in the manner mentioned before. The DC dielectric breakdown voltage (BDV) was determined by 50-point measurement according to the method of JIS C-2318. The corona starting voltage (CSV) and corona extinction voltage (CEV) were measured by a tuning corona detector.

Example 1

A crystalline polypropylene with M.I. of 3.0 and I.I. of 97% was melt-extruded through a ring die with a die diameter of 150 mm and a lip clearance of 0.5 mm at an extrusion temperature of 240°C to form a tubular melt. Then the inner side of said melt was contacted and slided on a metallic cooling mandrel with an effective length of 69 cm which was mounted immediately below said ring die by heat sealing thereto, while the outer side of said melt was cooled by exposing it to an atmosphere in which air heated to 35°C had been circulated, and the melt was taken up downwardly at a take-up rate of 11 m/min to obtain a tubular unstretched molded article with a thickness of 460 $\mu$. Water was circulated in the inside of the cooling mandrel to control the inlet temperature thereof at 6°C and the outlet temperature at 43°C. Then said unstretched molded article was heated by an infrared heater controlled at 170°C and biaxially stretched 5.4 times the original length longitudinally and 6.5 times crosswise according to a tubular biaxial stretching method and then further subjected to a heat treatment at 140°C under 10% restricted contraction in each direction to obtain a biaxially stretched polypropylene film with a thickness of 18 $\mu$. On one side of the thus obtained stretched film existed the large-sized crater-like rugged structures with a diameter of approximately 0.1 mm at a distribution density of about 5,000 pieces/cm², said structures being composed of the fibrous textures superposed and intertwined with each other, and inside said large-sized crater-like rugged structures existed about 20—15 pieces of small-sized crater-like rugged structures with a diameter of approximately 0.03 mm. There also existed the crimped fibrous structures. The degree of surface roughness was 8%.

Example 2

A crystalline polypropylene with M.I. of 3.5 and I.I. of 97% was melt-extruded through a ring die with a die diameter of 160 mm and a lip clearance of 1.5 mm at an extrusion temperature of 240°C to form a tubular melt. Then the inner side of said melt was contacted and slided on a cooling mandrel with an effective length of 65 cm mounted at a location 20 cm below said ring die while the outer side of said melt was first cooled naturally with air of 20°C and then exposed to water in a 40°C external cooling liquid tank at a position just below the frost line for further cooling, and the melt was taken up downwardly at a take-up rate of 11.1 m/min to obtain a tubular unstretched molded article with a thickness of 410 $\mu$. Water was circulated in the inside of the cooling mandrel to control the inlet temperature thereof at 7°C and the outlet temperature at 45°C. Then said unstretched molded article was heated by an infrared heater controlled at 165°C, biaxially stretched 6.4 times the initial length longitudinally and 5.5 times crosswise according to a tubular biaxial stretching method and then subjected to a heat treatment at 145°C under 8% restricted contraction in each direction to obtain a biaxially stretched polypropylene film with a thickness of 15 $\mu$. On one side of the thus obtained stretched film, there existed the large-sized crater-like rugged structures with a diameter of approximately 0.12 mm at a distribution density of about 5,000 pieces/cm², said structures being composed of the fibrous textures superposed and intertwined with each other, and inside said large-sized crater-like rugged structures there existed about 25 pieces of the small-sized crater-like rugged structures with a diameter of approximately 0.015 mm. There also existed the crimped fibrous structures. The degree of surface roughness was 10%.

By using this stretched film (specimen A) and the separately prepared 18 $\mu$-thick film specimens (B—E) specified below, there were produced the capacitors (2.4 KVAC, 0.6 $\mu$F) composed of one sheet of 6 $\mu$ aluminum electrode foil, two sheets of said film and one sheet of 13 $\mu$ insulating paper, and their electrical properties were measured. The results are shown in Table 1.

TABLE 1

| Film specimen | CSV (volts at 17°C) | CEV (volts at 17°C) | BDV (KV at 17°C) | BDV (after passage of 30 hr KV at 17°C) |
|---|---|---|---|---|
| A | 3200 | 2700 | 18 | 15 |
| B | 3100 | 2680 | 18 | 10 |
| C | 3000 | 2500 | 16 | 10 |
| D | 2500 | 2000 | 14 | 8 |
| E | 2000 | 1540 | 12 | 5 |

Film specimen B:
Approximately 0.015 mm-diameter small-sized crater-like rugged structures alone existed at a distribution density of 80 pieces/cm² plus the crimped fibrous rugged structures. Surface roughness: 8%.

Film specimen C:
Approximately 0.12 mm-diameter large-sized crater-like rugged structures alone existed at a distribution density of 4,500 pieces/cm² plus the crimped fibrous structures. Surface roughness: 8%.

Film specimen D:
Approximately 0.12 mm-diameter large-sized crater-like rugged structures existed at a distribution density of about 5,000 pieces/cm², and inside them there existed about 24 pieces of approximately 0.015 mm-diameter small-sized crater-like rugged structures. There also existed the crimped fibrous structures. Surface roughness: 4%.

Film specimen E:
Ordinary smooth-surfaced film.
As apparent from the results shown in Table 1, specimen A had good initial properties and also maintained good properties after passage of 30 hours.

Example 3
A crystalline polypropylene with M.I. of 2.5 and I.I. of 97% was melt-extruded through a ring die with a die diameter of 150 mm and a lip clearance of 0.5 mm at an extrusion temperature of 238°C to form a tubular melt, and the inner side of this melt was contacted and slided on an aluminum-made cooling mandrel with an effective length of 60 cm mounted at a location 5 mm below said ring die while the outer side of said melt was exposed to an atmosphere circulated with air heated to 50°C, and under this condition, the metal was taken up downwardly at a take-up rate of 18 m/min to obtain a tubular unstretched molded article with a thickness of 270 $\mu$. Water was circulated in the inside of the cooling mandrel to control the inlet temperature thereof at 5°C and the outlet temperature at 55°C. Thereafter, said unstretched molded article was passed through a hot air circulated oven controlled at 170°C and biaxially stretched 5.0 times the initial length longitudinally and 6.2 times crosswise according to a tubular simultaneous biaxial stretching method, followed by a heat treatment at 150°C under 10% restricted contraction in each direction to obtain a biaxially stretched polypropylene film with a thickness of 12 $\mu$. This stretched film had, on one side thereof, the approximately 0.08 mm-diameter crater-like rugged structures at a distribution density of about 4,000 pieces/cm², said structures being composed of the fibrous textures superposed and intertwined with each other, and inside and between said structures there existed the small-sized (about 0.009 mm-diameter) crater-like rugged structures at a distribution density of about 50,000 pieces/cm². There also existed the crimped fibrous rugged structures. The degree of surface roughness was 10%.

7

By using this stretched film (specimen A) and the film specimens B, D and E used in Example 2, there were produced 30 pieces of capacitors (500 VAC, 2 $\mu$F) by layering and convoluting two sheets of each film specimen and two sheets of 7 $\mu$ aluminum electrode foil to make an element and impregnating it with an insulating oil, and these capacitors were subjected to a life test under load of 600 V and 700 V at 70°C. The results are shown in Table 2 (the number of the capacitors which failed/the number of the capacitors tested).

TABLE 2

| Testing conditions | Specimen A | Specimen B | Specimen D | Specimen E |
|---|---|---|---|---|
| 600 V/70°C | 0/30 | 0/30 | 230 | 15/30 |
| 700 V/70°C | 5/30 | 9/30 | 18/30 | 24/30 |

Example 4

Various types of tubular unstretched molded articles were obtained by using the crystalline polypropylene and the ring die employed in Example 3 and also using a cooling mandrel with an effective length of 65 cm set 5 mm below said ring die under the conditions shown in Table 3. The outer side of the tube was exposed to a 30°C air atmosphere. Then these unstretched molded articles were heated by an infrared heater controlled at 150°C, then biaxially stretched at the stretching ratios shown in Table 3 according to a tubular simultaneous biaxial stretching method and then heat-treated at 145°C under 9% restricted contraction in each direction to obtain the biaxially stretched polypropylene films having the various thicknesses shown in Table 3. These stretched films had on one side thereof the large-sized crater-like rugged structures of various diameters having, at the periphery, protuberances composed of the fibrous textures superposed and intertwined with each other as well as the small-sized crater-like rugged structures and crimped fibrous structures. Table 4 shows the results of determination of the distribution status of said structures and the degree of surface roughness of the respective films. The small-sized crater-like rugged structures were distributed inside the large-sized crater-like rugged structures.

TABLE 3

| Run No. | Extrusion temperature (°C) | Cooling mandrel | | Take-up rate (m/min) | Thickness of tubular unstretched molded article ($\mu$) | Stretching ratio | | Thickness of stretched film ($\mu$) |
|---|---|---|---|---|---|---|---|---|
| | | Inlet temp. (°C) | Outlet temp. (°C) | | | Longitudinal | Crosswise | |
| 1 | 244 | 8 | 52 | 18 | 233 | 5.4 | 5.8 | 9 |
| 2 | 242 | 7 | 46 | 15.6 | 337 | 5.3 | 6.4 | 12 |
| 3 | 241 | 6 | 39 | 8.5 | 641 | 5.5 | 6.4 | 22 |
| 4 | 241 | 6 | 38 | 8.0 | 729 | 5.5 | 6.4 | 25 |
| 5 | 241 | 6 | 38 | 6.7 | 874 | 5.5 | 6.4 | 30 |

TABLE 4

| Run No. | Diameter of large-sized crater-like rugged structures (mm) | Distribution density of large-sized crater-like rugged structures (pieces/cm²) | Diameter of small-sized crater-like rugged structures (mm) | Number of small-sized crater-like rugged structures | Surface roughness (%) |
|---|---|---|---|---|---|
| 1 | 0.1 | 4000 | 0.01 | 10 | 12 |
| 2 | 0.15 | 3500 | 0.016 | 7 | 12 |
| 3 | 0.09 | 4500 | 0.008 | 13 | 10 |
| 4 | 0.08 | 4500 | 0.008 | 12 | 10 |
| 5 | 0.09 | 4500 | 0.008 | 13 | 9 |

**Claims**

1. A method of producing a dielectric polypropylene film for oil-immersion type electrical appliances, said film having on its surface densely distributed surface-roughening structures comprising crater-like structures having, at the periphery, protuberances composed of fibrous elements superposed and intertwined with each other and including large-sized structures having a diameter of about 0.02 to 0.2 mm and small-sized structures having a diameter of about 0.002 to 0.02 mm where at least some of the small-sized structures exist inside the large-sized structures, and randomly undulating fibrous structures, said film having a degree of surface roughness as defined in the description of at least 5%, the method comprising: melt-extruding a crystalline polypropylene which does not contain a $\beta$ type crystallization nucleating agent through a ring die (1) at a temperature within the range of 210—250°C to form a tubular melt (3), subsequently progressively cooling the tubular melt by sliding the inner side of the said melt on a cooling mandrel (4) in counterflow to a cooling medium within the mandrel in such a manner that the relation between a temperature gradient factor (Y) defined by the following formula (I) and the thickness (X) of the obtained tubular unstretched molded article satisfies the requirement of the following formula (II), while exposing the outer side of said tubular melt to a cooling medium (12) of a temperature below $T_2$°C to cool said melt and then taking it up to obtain unstretched polypropylene containing no $\beta$ type crystallisation nucleating agent, and then biaxially stretching said polypropylene under such conditions that the stretching temperature at the stretching initiation point is in the range of 145°—176°C and the stretching ratio in one direction is less than 8, where:—

$$Y(°C/sec) = \frac{(T_2-T_1) \times R}{L} \qquad (I)$$

and

$$Y > \frac{4400}{X} \qquad (II)$$

$T_1$ is the cooling medium temperature in °C at the inlet of the cooling mandrel
$T_2$ is the cooling medium temperature in °C at the outlet of the cooling mandrel
R is the tube take-up rate in cm/sec
L is the effective length in cm of the cooling mandrel
X is the thickness in $\mu$ of the unstretched molded article.

2. A method according to claim 1 wherein $T_2-T_1$ lies between 32 and 44 degrees.

3. A method according to claim 1 or claim 2 wherein the take-up rate lies between 11.167 and 30 cm/sec (6.7 and 18 m/min).

**Revendications**

1. Procédé pour produire un film diélectrique en polypropylène pour des appareils électriques du type à isolation à l'huile, ledit film présentant sur sa surface des structures de formation d'une surface rugueuse, réparties d'une manière dense et comprenant des structures en forme de cratère qui présentent, sur leur pourtour, des protubérances composées d'éléments fibreux superposés et entrelacés les uns avec les autres et incluent des structures de grandes dimensions présentant un diamètre d'environ 0,02 à 0,2 mm et des structures de petites dimensions possédant un diamètre d'environ 0,002 à 0,02 mm, certaines au moins des structures de petites dimensions étant présentes à l'intérieur des structures de grandes dimensions, ainsi que des structures fibreuses ondulées au hasard, ledit film possédant un taux de rugosité superficielle tel que défini dans la description, d'au moins 5%, le procédé comprenant les étapes consistant: à extruder à l'état fondu un polypropylène cristallin qui ne contient pas d'agent producteur de germes de cristallisation de type $\beta$, à travers une filière annulaire (1) et sous une température située à l'intérieur de la plage de 210 à 250°C, pour former une masse fondue tubulaire (3), à refroidir ensuite progressivement la masse fondue tubulaire en faisant glisser la face intérieure de ladite masse fondue sur un mandrin de refroidissement (4), à contre-courant par rapport à un agent de refroidissement circulant à l'intérieur du mandrin, de telle manière que la relation entre un facteur de gradient de température (Y) défini par la formule (I) ci-dessous et l'épaisseur (X) de l'article moulé tubulaire non-étiré obtenu, satisfasse la condition exprimée dans la formule (II) ci-dessous, tout en exposant la face extérieure de ladite masse fondue tubulaire à un agent de refroidissement (12) ayant une température inférieure à $T_2$°C pour refroidir ladite masse fondue, puis à l'enrouler de façon à obtenir du polypropylène non-étiré ne contenant pas d'agent producteur de germes de cristallisation de type $\beta$ et à ensuite étirer suivant deux axes ledit polypropylène sous des conditions telles que la température d'étirage au point de départ de l'étirage se situe dans la plage de 145° à 176°C et que le degré d'étirage dans une direction soit inférieur à 8, avec:

$$Y(°C/sec)= \frac{(T_2-T_1)\times R}{L} \qquad (I)$$

et

$$Y> \frac{4400}{X} \qquad (II)$$

$T_1$ est la température de l'agent de refroidissement en °C à l'orifice d'entrée du mandrin de refroidissement

$T_2$ est la température de l'agent de refroidissement en °C à l'orifice de sortie du mandrin de refroidissement

R est la vitesse d'enroulement du tube en cm/sec

L est la longueur utile en cm du mandrin de refroidissement

X est l'épaisseur en $\mu$ de l'article moulé non-étiré.

2. Procédé selon la revendication 1, dans lequel $T_2-T_1$ se situe entre 32 et 44 degrés.

3. Procédé selon la revendication 1 ou la revendication 2, dans lequel la vitesse d'enroulement se situe entre 11,167 et 30 cm/sec (6,7 et 18 m/min).

## Patentansprüche

1. Verfahren zur Herstellung einer dielektrischen Polypropylenfolie für ölisolierte bzw. ölgeschützte elektrische Einrichtungen, wobei die Folie an ihrer Oberfläche dicht verteilte, die Oberfläche aufrauhende Strukturen hat, die aus kraterartigen Strukturen, die am Umfang aus übereinandergelagerten und miteinander verschlungenen Faserelementen bestehende Vorsprünge aufweisen und große Strukturen mit einem Durchmesser von etwa 0.02 bis 0.2 mm und kleine Strukturen mit einem Durchmesser von etwa 0.002 bis 0.02 mm umfassen, wobei sich mindestens einige der kleinen Strukturen innerhalb der großen Strukturen befinden, und aus regellos wellenförmig verlaufenden Faserstrukturen bestehen, wobei die Folie einen Oberflächenrauheitsgrad, wie er in der Beschreibung definiert ist, von mindestens 5% hat und wobei das Verfahren darin besteht, daß ein kristallines Polypropylen, das keinen Keimbildner für eine Kristallisation vom $\beta$-Typ enthält, durch eine Ringdüse (1) bei einer Temperatur in dem Bereich von 210 bis 250°C schmelzextrudiert wird, um eine schlauchförmige Schmelze (3) zu formen, daß die schlauchförmige Schmelze danach fortschreitend gekühlt wird, indem die Innenseite der Schmelze an einem Kühldorn (4) im Gegenstrom zu einem innerhalb des Dorns befindlichen Kühlmittel derart entlanggleiten gelassen wird, daß die Beziehung zwischen einem durch die folgenden Formel (I) definierten Temperaturgradientfaktor (Y) und der Dicke (X) des erhaltenen schlauchförmigen, nicht gereckten Formkörpers die Bedingung der folgenden Formel (II) erfüllt, während die Außenseite der schlauchförmigen Schmelze einem Kühlmittel (12) mit einer unterhalb von $T_2$°C liegenden Temperatur ausgesetzt wird, um die Schmelze abzukühlen, und daß sie dann aufgenommen wird, um ein nicht gerecktes Polypropylen zu erhalten, das keinen Keimbildner für eine Kristallisation vom $\beta$-Typ enthält, und daß das Polypropylen dann unter derartigen Bedingungen zweiachsig gereckt wird, daß die Recktemperatur am Anfangspunkt des Reckens in dem Bereich von 145°C bis 176°C liegt und das Reckverhältnis in einer Richtung weniger als 8 beträgt, worin:

$$Y(°C/s)= \frac{(T_2-T_1)\times R}{L} \qquad (I)$$

und

$$Y> \frac{4400}{X} \qquad (II)$$

$T_1$ die Temperatur (in °C) des Kühlmittels am Einlaß des Kühldorns ist,

$T_2$ die Temperatur (in °C) des Kühlmittels am Auslaß des Kühldorns ist,

R die Aufnahmegeschwindigkeit (in cm/s) des Schlauchs ist,

L die effektive Länge (in cm) des Kühldorns ist und

X die Dicke (in $\mu$m) des nicht gereckten Formkörpers ist.

2. Verfahren nach Anspruch 1, bei dem $T_2-T_1$ zwischen 32 und 44°C liegt.

3. Verfahren nach Anspruch 1 oder 2, bei dem die Aufnahmegeschwindigkeit zwischen 11,167 und 30 cm/s (6,7 und 18 m/min) liegt.

# F I G. 1

0 036 457

# F I G. 2

FACTOR OF TEMPERATURE GRADIENT : Y (°C/sec)

THICKNESS OF UNSTRETCHED MOLDED ARTICLE : X ($\mu$)